# EUROPÄISCHE PATENTSCHRIFT

(11) **EP 1 230 820 B1**
(45) Veröffentlichungstag und Bekanntmachung des Hinweises auf die Patenterteilung: **21.07.2004**
(21) Anmeldenummer: 00987152.6
(22) Anmeldetag: 16.11.2000
(51) Int. Cl.: H04Q 7/38

(54) **VERFAHREN ZUR AUTHENTIFIKATION EINES FUNK-KOMMUNIKATIONSNETZES GEGENÜBER EINER MOBILSTATION SOWIE EIN FUNK-KOMMUNIKATIONSNETZ UND EINE MOBILSTATION**
METHOD FOR AUTHENTICATING A RADIO COMMUNICATION NETWORK VIS-A-VIS A MOBILE STATION AND RADIO COMMUNICATION NETWORK AND MOBILE STATION
PROCEDE D'AUTHENTIFICATION D'UN RESEAU DE COMMUNICATION RADIO PAR RAPPORT A UNE STATION MOBILE AINSI QUE RESEAU DE COMMUNICATION RADIO ET STATION MOBILE

(30) Priorität: 16.11.1999 DE 19955096
(43) Veröffentlichungstag der Anmeldung: 14.08.2002
(73) Patentinhaber: SIEMENS AKTIENGESELLSCHAFT, 80333 München (DE)
(72) Erfinder: HORN, Günther, 81541 München (DE); VINCK, Bart, 80469 München (DE)
(86) Internationale Anmeldenummer: PCT/DE2000/004060
(87) Internationale Veröffentlichungsnummer: WO 2001/037586

(56) Entgegenhaltungen:
- WO-A-91/01067
- US-A- 5 799 084
- "Universal Mobile Telecommunications System (UMTS); 3G Security; Security Architecture (3g TS 33.102 version 3.1. Release 1999)" ETSI TECHNICAL SPECIFICATION, 1. Januar 2000 (2000-01-01), Seiten 1-60, XP002167547 Sophia Antipolis Cedex, France in der Anmeldung erwähnt

## Beschreibung

Die Erfindung betrifft ein Verfahren zur Authentifikation eines Funk-Kommunikationsnetzes gegenüber einer Mobilstation gemäß dem Oberbegriff des Patentanspruchs 1 sowie ein entsprechendes Funk-Kommunikationsnetz gemäß dem Oberbegriff des Patentanspruchs 7 und eine entsprechende Mobilstation gemäß dem Oberbegriff des Patentanspruchs 8.

Es ist allgemein bekannt, dass Mobilstationen mobiler Teilnehmer eines Funk-Kommunikationsnetzes zumindest ein Identitatsmodul (User Services Identity Module bei UMTS-Netzen oder Subscriber Identity Module bei GSM-Netzen) aufweisen. Auch ist es bekannt, in Funk-Kommunikationsnetzen mehrere Arten von Sicherungsfunktionen anzuwenden. So ist in der EP-0 822 727 A2 ein Verfahren und ein System zur Teilnehmerauthentifikation und/oder Verschlüsselung von Informationen beschrieben, bei dem mobile Benutzer eines zellularen digitalen Mobilfunknetzes nach dem GSM-Standard sich mit dem Identitätsmodul - SIM-Karte - gegenüber dem jeweiligen Netz identifizieren. Sicherheitsparameter und Sicherheitsalgorithmen dienen dabei zur Teilnehmerauthentifikation zwischen Mobilstation und Mobilfunknetz.

Darüber hinaus ist auch eine Sicherungsfunktion in Form einer Netzauthentifikation möglich, d.h. das Funk-Kommunikationsnetz authentifiziert sich gegenüber der Mobilstation, um Missbrauch und Korruption beispielsweise durch das "Klonen" von Netzeinrichtungen wie Basisstationen usw. zum unberechtigten Abhören von Kommunikationsverbindungen zu detektieren und möglichst auszuschließen. Dazu ist in dem Dokument 3G TS 33.102 von 3GPP (3^{rd} Generation Partnership Project), Oktober 1999 eine Architektur beschrieben, die den Sicherheitsaspekt eines Funk-Kommunikationsnetzes der nächsten Generation - z.B. UMTS - in Bezug auf eine Netzauthentifikation behandelt. Das bekannte Authentifikationsverfahren beruht auf der "signed-challenge" Methode, bei der das Netz der Mobilstation 1) eine "challenge" (Zufallszahl RAND), 2) einen Informationsparameter in Form einer Sequenznummer, anhand der die Mobilstation verifizieren kann, dass sie diesen nicht zuvor benutzt hat, und 3) einen Authentifikationskode (message authentication code MAC), der netzseitig aus der "challenge" und der Sequenznummer gebildet wird, übersendet. Um die Authentifikation durchführen zu konnen, muss das Netz einen Authentifikationstoken (authentication token) mit der "challenge" mitsenden. Nach dem Empfang der obigen Informationen (RAND, AUTN) authentifiziert die Mobilstation den Ursprung und Integrität dieser Informationen, in dem sie einen erwarteten Authentifikationskode (XMAC) berechnet und mit dem im eingetroffenen Authentifikationstoken enthaltenen Wert des Authentifikationskodes (MAC) vergleicht. Für den Fall, dass Identität vorliegt, beginnt die Mobilstation mit der Uberprüfung, ob die empfangene Sequenznummer "frisch" ist, d.h. sie nicht einmal zuvor benutzt wurde. Dazu bewertet sie die Vergangenheit der von ihr bereits akzeptierten Sequenznummern. Die erfolgreiche Verifikation des Authentifikationskodes zusammen mit der Gewährleistung der Unbenutztheit der empfangenen Sequenznummer führen zu der Authentifikation des Netzes gegenüber dem Teilnehmer. Bei dieser Methode ist es zur Vermeidung von Missbrauch und dergleichen erforderlich, eine Wiederholung der "challenge" sicher zu vermeiden.

Es werden üblicherweise mehrere Stapel (batches) von Authentifikationsvektoren, die jeweils den Authentifikationstoken mit der Sequenznummer enthalten, netzseitig erzeugt. Für jede neue Authentifikation aus dem jeweiligen Stapel wird ein unbenutzter Authentifikationsvektor ausgewahlt und zumindest die Sequenznummer in einer Authentifikationsanfrage zur Mobilstation gesendet. Mobilstationsseitig wird dann von dem Identitätsmodul entschieden, ob die empfangene Sequenznummer für die Authentifikation akzeptiert oder abgewiesen wird, und die Authentifikationsanfrage beantwortet.

Um dem Identitätsmodul zu gewahrleisten, dass die Sequenznummer tatsächlich "frisch" vergeben wurde, weist das Netz nur Sequenznummern auf, die immer größer als die zuletzt gesandte Nummer sind. Das Identitätsmodul braucht dann nur einen einzelnen Zähler, dessen aktueller Zählwert jeweils mit dem Wert für die zuletzt akzeptierte Sequenznummer identisch ist. Eine neue Sequenznummer wird nur dann akzeptiert, wenn sie größer als der aktuelle Zählwert ist. Dennoch kann es dabei vorkommen, dass die Reihenfolge der ausgesandten Nummern nicht mit der Reihenfolge der empfangenen Nummern übereinstimmt, beispielsweise wenn der mobile Teilnehmer mit seiner Mobilstation zwischen mehreren Netzen sich bewegt und an verschiedenen Netzeinrichtungen sich einbuchen will. Würde das Identitätsmodul nur einen einzigen Wert speichern, käme es zu einer Abweisung von Sequenznummern, wenn diese außer der Reihenfolge benutzt werden - was grundsätzlich nicht verboten ist und nicht wenn diese wiederholt werden - was sicher zu vermeiden ist.

Eine theoretische Methode zum sicheren Erkennen einer Wiederholung von Sequenznummern besteht darin, dass das Identitätsmodul alle bereits empfangenen Nummern speichert. Da zum einen die Anzahl der Nummern prinzipiell unbegrenzt und zum anderen die Speicherkapazität des Identitätsmoduls limitiert ist, hat diese Methode nur eine kurze Lebenszeit. Ein besseres Verfahren nutzt eine Liste mit den L größten Sequenznummern, die es bereits empfangen und akzeptiert hat. Empfängt die Mobilstation eine Sequenznummer, akzeptiert sie diese in ihrem Identitätsmodul nur dann, wenn sie noch nicht gespeichert und größer als die kleinste Nummer in der Liste ist. Diese Vorgehensweise erlaubt im Einzelfall eine Benutzung von Sequenznummern, die außerhalb der Reihenfolge zur Mobilstation gesandt wurden und die jeweils kleiner als die höchste Nummer und der niedrigste Listeneintrag sind. Dies erfordert neben dem beträchtlichen Speicheraufwand auch ein kompliziertes Managen einer geordneten Liste, wobei vor allem explizite Managementbefehle zum Verwalten dieser Liste zu definieren und auszuführen sind.

Aufgabe der vorliegenden Erfindung ist es daher, ein möglichst effektives und wirtschaftliches Verfahren zur Netzauthentifikation sowie ein entsprechendes Funk-Kommunikationsnetz und eine entsprechende Mobilstation anzugeben.

Diese Aufgabe wird gemäß den Merkmalen des Patentanspruchs 1 hinsichtlich des Verfahrens und durch die Merkmale des Patentanspruchs 13 hinsichtlich der Mobilstation sowie durch die Merkmale des Patentanspruchs 12 hinsichtlich des Netzes gelöst.

Ausgehend von dem oben beschriebenen Verfahren werden gemäß dem Gegenstand der Erfindung
- das Identitätsmodul vom Funk-Kommunikationsnetz darüber informiert, welche Authentifikationstoken mit zugehöriger Sequenznummer sich in ein- und demselben Stapel (BA) befinden, und
- von dem Identitätsmodul mindestens eine Sequenznummer pro Stapel gespeichert und für die Entscheidung über Akzeptanz oder Abweisung der empfangenen Sequenznummer benutzt.

Die Vorteile des Gegenstandes der Erfindung bestehen in
- der Reduzierung der Anforderungen an den Speicheraufwand im Identitätsmodul,
- der Vereinfachung der zur Akzeptanz der Sequenznummer erforderlichen Verifikation durch das Identitätsmodul, und
- in dem Wegfall expliziter Managementbefehle zur Listenadministration.

Durch die Erfindung erhält das Identitätsmodul Informationen über die Art, wie netzseitig die Sequenznummern bzw. die Authentifikationstoken pro Stapel generiert werden, und braucht daher bestenfalls nur mehr eine einzige Sequenznummer pro Stapel - vorzugsweise die höchste Sequenznummer aus dem jeweiligen Stapel - und nicht mehr alle Sequenznummern zu speichern. Die Reduzierung des Speicheraufwands im Modul ist signifikant und liegt etwa im Bereich der mittleren Stapelgröße. Das gegenüber dem bekannten Verfahren vereinfachte Managen der auf ein Minimum reduzierten Nummernliste ist ebenfalls gewährleistet, da mobilstationsseitig die Verifikation, ob eine eintreffende Nummer in der Liste bereits enthalten ist, und die Aktualisierung der Liste bei Akzeptanz dieser Nummer vermieden wird.

Vorteilhaft an dem erfindungsgemäßen Verfahren ist außerdem, dass die zusätzliche Information, welche Sequenznummern sich in ein- und demselben Stapel befinden, es erlaubt, dass das Netz keine Angaben über den aktuellen Aufenthaltsort des mobilen Teilnehmers mit seiner Mobilstation benötigt, wenn es entsprechende Sequenznummern in den Authentifikationstoken erzeugt. Damit kann sich der Teilnehmer zwischen mehreren Netzen beliebig bewegen (roaming), ohne dass - wie beim bekannten Verfahren - die Gefahr einer Zurückweisung von neuen Sequenznummern auf Grund einer veranderten Nummernreihenfolge - bedingt durch die Mobilität - droht, obwohl diese neuen Nummern noch gar nicht abgelehnt wurden und daher eigentlich nutzbar wären.

Eine besonders vorteilhafte Weiterbildung der Erfindung sieht vor,
dass von einer Netzeinrichtung des Funk-Kommunikationsnetzes für die Authentifikationstoken jeweils ein Modusparameter vergeben wird, der für alle Authentifikationstoken desselben Stapels einen identischen Wert aufweist,
dass der Modusparameter und die Sequenznummer des ausgewählten Authentifikationstokens zu dem Identitätsmodul gesendet werden, und
dass von dem Identitätsmodul die empfangene Sequenznummer dann akzeptiert wird, wenn sie größer als die mit dem empfangenen Modusparameter korrespondierende gespeicherte Sequenznummer ist.

Durch einen einzigen Modusparameter pro Stapel, der alle Sequenznummern desselben Stapels identisch kennzeichnet, wird die Speicherung der Vielzahl von Sequenznummern in einer Liste des Identitätsmoduls überflüssig und die Netzauthentifikation in Bezug auf den erforderlichen Aufwand für die Generierung und die Verwaltung dieses Modusparameters besonders effektiv. Anstatt eine lange Liste von Sequenznummern speichern zu müssen, genügt ein wesentlich geringeres Nummernfeld. Der identische Modusparameter bildet die Information für das Identitätsmodul, wie netzseitig die zu ein- und demselben Stapel gehörigen Sequenznummern, generiert werden.

Als günstig hat sich gemäß einer Weiterbildung der Erfindung erwiesen, wenn von dem Identitätsmodul ein Zählwert pro Modusparameter zur Entscheidung über Akzeptanz oder Abweisung der empfangenen Sequenznummer gespeichert wird. Dies ist eine wirtschaftliche und effektive Methode, um mobilstationsseitig die Entscheidung schnell und mit geringstmöglichem Aufwand zu ermitteln.

Bevorzugt werden die Modusparameter den Stapeln zirkulierend zugeteilt, d.h. unabhängig davon, ob diese für neue Authentifikationen in ein- und demselben Netz oder in verschiedenen Netzen vergeben werden. Die Netzeinrichtung braucht durch die zirkulare Vergabe der Modusparameter weder irgendeine Information über den Aufenthaltsort der Mobilstation, gegenüber der die Authentifikation erfolgt, zu halten noch diese zu pflegen.

Eine alternative Variante der Erfindung sieht vor,
dass von einer Netzeinrichtung des Funk-Kommunikationsnetzes für die Authentifikationstoken mehrere Modusparameter vergeben werden, die für alle Authentifikationstoken desselben Stapels unterschiedliche Werte aufweisen und die sich jeweils innerhalb eines einzelnen Stapels in der gleichen Reihenfolge wie die Authentifikationstoken befinden, und
dass allen Authentifikationstoken des Stapels die gleiche Sequenznummer zugeteilt wird. Unterschiedliche Modusparameter bilden die Information für das Identitätsmodul, wie netzseitig die zu ein- und demselben Stapel gehörigen Sequenznummern, generiert werden. Auf diese Weise entsteht ebenfalls eine Reduzierung des Speicheraufwands im Identitätsmodul.

Bevorzugt wird von dem Identitätsmodul eine Liste, deren Einträge jeweils eine Sequenznummer und einen Modusparameter aufweisen, zur Entscheidung über Akzeptanz oder Abweisung der empfangenen Sequenznummer gespeichert. Gemäß weiterer Ausgestaltungen der Erfindung kann die empfangene Sequenznummer mit einfachen Mitteln dann mobilstationsseitig akzeptiert werden, wenn sie nicht in der Liste erscheint und größer als die kleinste gespeicherte Sequenznummer ist, und/oder wenn sie in der Liste erscheint und der empfangene Modusparameter größer als der mit der eingetragenen Sequenznummer gespeicherte Modusparameter ist.

Gemäß einer weiteren Ausgestaltung der Erfindung wird zumindest ein spezieller Modusparameter reserviert und bei Vorliegen einer dringenden Anforderung eines einzelnen Authentifikationsvektors vergeben. Dadurch stehen normale Modusparametere und spezielle Modusparametere zur Verfügung, die je nach aktuellem Zustand der Netzeinrichtung - befindet sie sich in einem nicht dringenden oder in einem dringenden Zustand - flexibel zuordenbar sind.

Von Vorteil ist auch, wenn von der Netzeinrichtung des Funk-Kommunikationsnetzes die Modusparameter derart vergeben werden, dass die von unterschiedlichen Netzeinrichtungen gespeicherten Stapel von Authentifikationsvektoren verschiedene Modusparameter aufweisen. Damit ist gewährleistet, dass die Netzeinrichtungen in der überwiegenden Zeit unterschiedliche Modusparameter für unterschiedliche Stapel zur Verfügung haben, und damit eine Wiederholung (replay) des "challenge" mit dem Authentifikationstoken und der darin enthaltenen Sequenznummer sicher vermieden wird.

Die Erfindung wird anhand eines Figuren dargestellten Ausführungsbeispiels näher erläutert. Im einzelnen zeigen
- FIG 1: das Blockschaltbild einer Mobilstation mit Identitätsmodul, und
- FIG 2: den Nachrichtenfluss zwischen Identitätsmodul und Netzeinrichtungen für eine Netzauthentifikation.

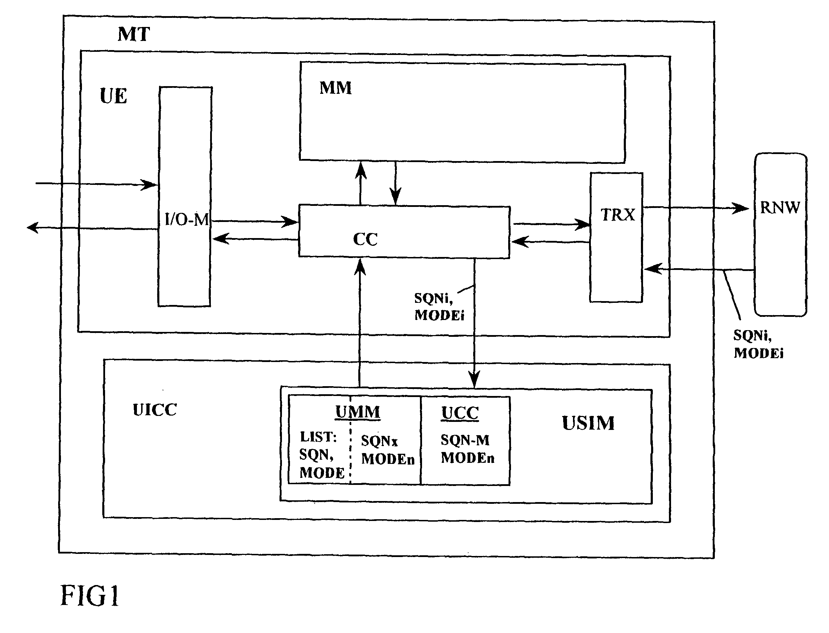

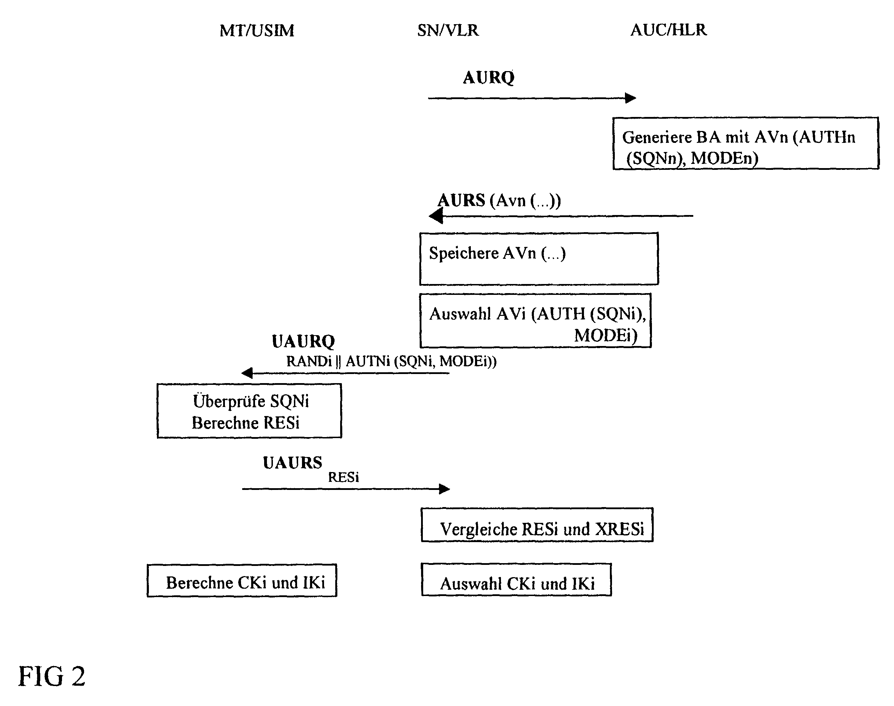

FIG 1 zeigt in einem Blockschaltbild den grundsätzlichen Aufbau einer Mobilstation MT, das ein Benutzergerät UE (User Equipment) und eine Chipkarte UICC (UMTS Identity Chip Card) mit einem Identitätsmodul USIM (UMTS Services Identity Module) aufweist. Das Beispiel bezieht sich auf einen Einsatz der Mobilstation MT in einem zukünftigen UMTS (Universal Mobile Telecommunication System) - Funk-Kommunikationsnetz, könnte aber ebenso auf andere Funk-Kommunikationsnetze angewendet werden. Ein mobiler Teilnehmer nutzt die Mobilstation bekanntlich zur Kommunikation mit anderen Teilnehmern von Kommunikationsnetzen oder mit deren Netzeinrichtungen. Über eine Funkschnittstelle werden die Informationen auf Kommunikationsverbindungen zwischen der Mobilstation MT und Netzeinrichtungen eines Funk-Kommunikationsnetzes RNW - siehe auch FIG 2 - in beiden Übertragungsrichtungen ausgetauscht.

Zum Senden und Empfangen von Funksignalen, die Sprache, Daten usw. enthalten können, weist das Benutzergerät UE eine Sende-Empfangs-Einrichtung TRX auf, die mit einer zentralen Steuereinrichtung CC verbunden ist. Die zentrale Steuereinrichtung CC ist darüber hinaus an eine Speichereinrichtung MM und ein Ein-Ausgabe-Modul I/O-M angeschlossen. Das Ein-Ausgabe-Modul I/O-M bildet eine Schnittstelle zu dem Benutzer - z.B. einem mobilen Teilnehmer SUB - , um im vorliegenden Beispiel insbesondere die Eingaben des Teilnehmers, der üblicherweise der Inhaber der Mobilstation ist, zu empfangen. Das Benutzergerät UE ist an das Identitätsmodul USIM über eine Benutzergerät-Chipkarten-Schnittstelle angeschaltet. Der mobile Teilnehmer des zellularen digitalen Mobilfunknetzes kann sich mit dem Identitätsmodul USIM gegenüber dem jeweiligen Netz, in dem er registriert ist, identifizieren. Das Identitätsmodul USIM speichert teilnehmerbezogene Daten und Authentifikationsdaten, wozu es eine lokale Steuereinrichtung UCC und eine lokale Speichereinrichtung UMM , die mit der Sende-Empfangs-Einrichtung TRX entweder direkt oder über die zentrale Steuereinrichtung CC verbunden sind, aufweist.

Zur Authentifikation des Funk-Kommunikationsnetzes RNW und dessen Einrichtungen gegenüber der Mobilstation MT bzw. deren Identitätsmodul USIM erfolgt eine Übertragung von Nachrichten (messages) mit Informationen, von denen die für die Erfindung und deren Ausgestaltungen relevanten Signale und Parameter in FIG 2 erläutert sind. Die Netzauthentifikation verläuft gemäß dem bekannten "signed challenge"-Protokoll, das mit der netzseitigen Generierung und Zuordnung sowie der mobilstationsseitigen Speicherung von Sequenznummern kombiniert ist. Sobald das den mobilen Teilnehmer bzw. seine Mobilstation MT bedienende Netz (serving network) bzw. eine seiner Netzeinrichtungen - netzintern Authentifikationsdaten anfordert - z.B. bei einer Aktualisierung des Aufenthaltsorts des Teilnehmers (Location Update) - , generiert eine Netzeinrichtung - die Authentifikationseinrichtung (AUC) - mehrere Authentifikationsvektoren (quintetts). Sind die vorhandenen Authentifikationsvektoren aufgebraucht, generiert die Netzeinrichtung neue Vektoren. Eine bestimmte Anzahl - z.B. fünf - Authentifikationsvektoren sind bevorzugt jeweils zu einem Stapel (batch) zusammengefasst. Jeder Authentifikationsvektor (AV) enthält eine Zufallszahl (RAND), einen Antwortparameter (XRES), einen Chiffrierschlüssel (CK), einen Integritätsschlüssel (IK) und einen Authentifikationstoken (AUTN). Jeder Authentifikationstoken (AUTN) enthält eine Sequenznummer (SQN), einen Authentifikationskode (MAC) und gemäß dem Gegenstand der Erfindung eine zusätzliche Information, die bevorzugt aus einem Modusparameter (MODE) besteht. Die Sequenznummern in den Authentifikationstoken (AUTN) bzw. Authentifikationsvektoren werden in aufsteigender oder absteigender Reihenfolge erzeugt.

Für jede neue Authentifikation wählt die Netzeinrichtung des Netzes RNW, die die Netzauthentifikation initiiert hat, aus dem jeweiligen Stapel einen unbenutzten Authentifikationsvektor aus. Danach sendet sie den Authentifikationstoken, der die Sequenznummer SQNi sowie den Modusparameter MODEi enthält, des ausgewählten Authentifikationsvektors zusammen mit der Zufallszahl in einer Authentifikationsanfrage über die Funkschnittstelle zur Mobilstation MT. Dabei kennzeichnet der Modusparameter MODEi gemäß dem Gegenstand der Erfindung, welche Sequenznummern sich in ein- und demselben Stapel befinden. Der Modusparameter MODEi, der für verschiedene Stapel unterschiedliche Werte aufweist, ist für alle Authentifikationstoken desselben Stapels identisch. Mobilstationsseitig wird von dem Identitätsmodul USIM entschieden, ob die empfangene Sequenznummer SQNi für die Authentifikation zu akzeptieren oder abzuweisen ist, und anschließend die Authentifikationsanfrage der Netzeinrichtung durch Aussenden einer entsprechenden Nachricht über die Funkschnittstelle zum Netz RNW beantwortet. Gemäß dem Gegenstand der Erfindung speichert das Identitätsmodul USIM in seiner Speichereinrichtung UMM eine Sequenznummer SQNx pro Modusparameter MODEn ab - vorzugsweise die höchste Sequenznummer des jeweiligen Stapels - , die dann für die Entscheidung über Akzeptanz oder Abweisung der empfangenen Sequenznummer SQNi verwendet wird. Vorzugsweise enthält die Speichereinrichtung UMM somit nur einen einzigen Eintrag SQNx für jeden der Modusparameter MODEn, was einen im Vergleich zur Verwaltung von Nummernlisten aller Sequenznummern minimalen Speicheraufwand bei bekannten Verfahren darstellt.

Eine dazu alternative Variante, wie dem Identitatsmodul USIM die Information, welche Authentifikationstoken zu demselben Stapel gehören, übermittelt wird, sieht vor, dass von der Netzeinrichtung des Funk-Kommunikationsnetzes mehrere Modusparameter MODE vergeben werden, die für alle Authentifikationstoken desselben Stapels unterschiedliche Werte aufweisen. Innerhalb eines einzelnen Stapels befinden sie sich dabei jeweils in der gleichen Reihenfolge wie die Authentifikationstoken. Allen Authentifikationstoken des Stapels wird dann die gleiche Sequenznummer SQN zugeteilt. Die Speichereinrichtung UMM des Identitätsmoduls USIM weist eine Liste LIST, deren Einträge jeweils die Sequenznummer SQN und den Modusparameter MODE umfassen, zur Entscheidung über Akzeptanz oder Abweisung der empfangenen Sequenznummer SQNi auf. Sobald das Identitätsmodul USIM einen Authentifikationstoken mit Sequenznummer SQNi und Modusparameter MODEi empfängt, akzeptiert sie die Sequenznummer dann, wenn diese nicht in der Liste LIST der Nummern erscheint und größer als die kleinste gespeicherte Sequenznummer SQN ist. Die empfangene Sequenznummer SQNi wird auch dann akzeptiert, wenn sie in der Liste LIST der Nummern erscheint und der in dem Authentifikationstoken enthaltene Modusparameter MODEi größer als der mit der eingetragenen Sequenznummer SQN gespeicherte Modusparameter MODE ist. Die Liste LIST der Speichereinrichtung UMM wird schließlich bei Akzeptanz der empfangenen Sequenznummer SQNi durch die Steuereinrichtung UCC im Identitätsmodul USIM aktualisiert.

Die lokale Steuereinrichtung UCC des Identitätsmoduls USIM verfügt über mehrere Zählwerte SQN-MS, die jeweils pro Modusparameter MODEn festgelegt und zur Entscheidung über Akzeptanz oder Abweisung der empfangenen Sequenznummer SQNi nutzbar sind. Mit beispielsweise insgesamt M zur Verfügung stehenden Modusparametern MODEn kann deren Zuordnung zu den Stapeln bzw. zu den Authentifikationsvektoren bzw. Authentifikationstoken jeweils ein- und desselben Stapels derart erfolgen, dass der aktuelle Stapel den Wert m < M, der nachste Stapel den Wert m + 1 usw. erhält. Falls dem aktuellen Stapel der Wert M zugewiesen wird, weist der darauffolgende Stapel den Wert m = 1 auf. Der Modusparameter MODEn umfasst beispielsweise ein Byte, das an die jeweilige Sequenznummer angehängt oder separat von ihr, aber gleichzeitig mit ihr übertragen werden kann. Diese zirkulierende Zuordnung von Modusparametern MODEn erfolgt unabhängig davon, ob diese für neue Authentifikationen in ein- und demselben Netz oder in verschiedenen Netzen zu generieren sind. Die Netzeinrichtung braucht durch die zirkulare Vergabe der Modusparametere weder irgendeine Information über den Aufenthaltsort der Mobilstation, gegenüber der die Authentifikation des Netzes erfolgt, zu halten noch diese zu pflegen. Vorzugsweise kann zumindest ein spezieller Modusparameter - z.B. der Wert m = 0 - reserviert und bei Vorliegen einer netzseitig dringenden Anforderung eines einzelnen Authentifikationsvektors vergeben werden. Im vorliegenden Beispiele stehen normale Modusparameter 1 ... M und ein einzelner spezieller Modusparameter 0 zur Verfügung, die je nach aktuellem Zustand der Netzeinrichtung - befindet sie sich in einem nicht dringenden oder in einem dringenden Zustand - flexibel zu erzeugen und zuzuordnen sind.

Der Nachrichtenfluss zwischen Identitätsmodul USIM der Mobilstation MT und den Netzeinrichtungen SN/VLR sowie AUC/HLR für die Netzauthentifikation zeigt FIG 2, wobei das Beispiel sich vor allem auf die bevorzugte Variante mit einem für alle sich in demselben Stapel befindlichen Authentifikationstoken identischen Modusparameter bezieht. SN (Serving Network) bezeichnet das die Mobilstation MT auf Grund seines Aufenthaltsorts versorgende Funk-Kommunikationsnetz, die Netzeinrichtungen VLR (Visitor Location Register) und HLR (Home Location Register) sind beispielsweise die bereits aus dem GSM-Netz bekannten Teilnehmerdatenregister zur Speicherung von Daten - z.B. Teilnehmerdaten, Dienstedaten usw. - , während AUC (Authentification Center) die Authentifikationseinrichtung netzseitig - als Gegenspieler zum Identitätsmodul USIM auf der Endgeräteseite - die Steuerung der für die Authentifikation erforderlichen Maßnahmen und Funktionen übernimmt.

Die Netzeinrichtung VLR initiiert die Authentifikation - beispielsweise nach einem "Location Update" der Mobilstation MT, die sich in den Zuständigkeitsbereich eines neuen Gebietes bewegt hat und daher dort einzubuchen ist - und fordert daher in einer Nachricht AURQ (Authentification Data Request) von der Netzeinrichtung AUC für den mobilen Teilnehmer, dessen Basisdaten die Netzeinrichtung HLR zur Verfügung stellt, Authentifikationsdaten an. Die Authentifikationseinrichtung AUC generiert einen Stapel BA von n Authentifikationsvektoren AVn (quintetts) - z.B. n = 5 - mit darin enthaltenen Authentifikationstoken AUTNn mit zugehörigen Sequenznummern SQNn und den für alle Authentifikationstoken AUTNn dieses Stapels BA identischen Modusparameter MODEn. Die eingetroffene Nachricht AURQ wird mit einer Nachricht AURS (Authentification Data Response), in der die Parameter AVn mit SQNn und MODEn enthalten sind, von der Authentifikationseinrichtung AUC beantwortet. Die Netzeinrichtung VLR speichert die empfangenen Authentifikationstoken AUTNn mit zugehörigen Sequenznummern SQNn und Modusparametern MODEn ab und wählt für die neue Authentifikation aus dem Stapel einen unbenutzten Authentifikationsvektor AVi mit der entsprechenden Sequenznummer SQNi und dem entsprechenden Modusparameter MODEi aus. Die Netzeinrichtung VLR bindet die ausgewählte Sequenznummer SQNi und den Modusparameter MODUSn zusammen mit der Zufallszahl RAND in eine Nachricht UAURQ (User Authentification Request) ein, die als Authentifikationsanfrage an die Mobilstation MT bzw. deren Identitätsmodul USIM über die Funkschnittstelle gesendet wird.

Das Identitätsmodul USIM überprüft die eintreffende Sequenznummer SQNi unter Berücksichtigung des mitgesandten Modusparameters MODEn, ob diese akzeptiert werden kann, d.h. ob nicht ein Missbrauch - z.B. durch Klonen einer Netzeinrichtung - oder ein Datenfehler durch erneute Benutzung (replay) einer bereits früher verwendeten Sequenznummer vorliegt - siehe Beschreibung zu FIG 1. Erfolgt keine Abweisung der empfangenen Sequenznummer SQNi, kann der für diese Authentifikation gültige individuelle Antwortparameter RESi vom Identitätsmodul USIM berechnet und in einer Nachricht UAURS (User Authentification Response) zur Netzeinrichtung VLR gesendet werden. Darüber hinaus berechnet das Identitätsmodul USIM auch den individuellen Chiffrierschlüssel CKi sowie den individuellen Integrationsschlüssel IKi, die beide für die Mobilstation MT gelten. Die Netzeinrichtung VLR vergleicht den eintreffenden Antwortparameter RESi mit dem im Authentifikationsvektor AVi gespeicherten eigenen Antwortparameter XRESi und betrachtet bei Übereinstimmung beider Parameter die Authentifikationsprozedur als erfolgreich durchgeführt. Des weiteren wählt sie die im Authentifikationsvektor AVi gespeicherten Chiffrierschlüssel Cki sowie Integritätsschlüssel IKi für die Netzseite aus. Sowohl vom Identitätsmodul USIM als auch von der Netzeinrichtung VLR werden danach diese Schlüssel CKi und IKi den Einheiten zur Verfügung gestellt, die im Endgerät bzw. im Netz Chiffrier- und Integritätsfunktion ausführen.

Angenommen, die deterministische Größe eines Stapels BA von Authentifikationsvektoren betrage b, dann stellen die M Moduszähler für die Modusparameter sicher, dass keiner der (M-1) x b Authentifikationsvektoren, die nach einem markierten Authentifikationsvektor generiert werden, eine Zurückweisung des markierten Authentifikationsvektors verursachen kann. Dies bedeutet, dass jeder der (M-1) x b Authentifikationsvektoren, der nach dem markierten Authentifikationsvektor erzeugt wird, vom Identitätsmodul USIM empfangen werden kann und dabei gewährleistet ist, dass der markierte Authentifikationsvektor akzeptiert wird. Würde man die bekannte Methode einer im Identitätsmodul USIM verwalteten Liste der höchsten Sequenznummern anwenden, bestünde die Liste aus (M-1) x b Einträgen. Nimmt man hingegen die Methode der mehrfachen Zuordnung von Modusparametern zu den Authentifikationstoken respektive zu den Stapeln und der Speicherung lediglich einer einzigen Sequenznummer für jeden der Stapel, entsteht ein um den Betrag b x (M-1)/M ∼ b geringerer Speicheraufwand im Identitätsmodul USIM. Da besonders die Implementierung auf Endgeräteseite üblicherweise auf einer Chipeinheit erfolgt, ist dort der Speicheraufwand von essentieller Bedeutung und daher die durch die Erfindung erzielte Speicherreduktion gegenüber bekannten Verfahren von großem Vorteil. Weitere Vorteile der erfindungsgemäßen Merkmale bestehen zum einen mobilstationsseitig in der Vermeidung der Erzeugung, Wartung und Aktualisierung einer geordneten Liste von Nummern im Identitätsmodul und zum anderen netzseitig in dem einfachen Managen einer aktuellen Anzahl von Modusparameteren durch die Authentifikationseinrichtung selbst, ohne dass hierfür eine separate Managementnachricht notwendig ist.

## Patentansprüche

1. Verfahren zur Authentifikation eines Funk-Kommunikationsnetzes gegenüber einer Mobilstation (MT) mit einem Identitätsmodul (USIM),
bei dem netzseitig
- Stapel (BA) von Authentifikationsvektoren (AVn), die jeweils einen Authentifikationstoken (AUTNn) mit einer Sequenznummer (SQNn) enthalten, erzeugt werden,
- für jede neue Authentifikation aus dem jeweiligen Stapel (BA) ein unbenutzter Authentifikationsvektor (AVi) ausgewählt wird, dessen Authentifikationstoken (AUTNi) und Sequenznummer (SQNi) zur Mobilstation (MT) gesendet werden, und
bei dem mobilstationsseitig
- von dem Identitätsmodul (USIM) entschieden wird, ob die empfangene Sequenznummer (SQNi) für die Authentifikation akzeptiert oder abgewiesen wird,
**dadurch gekennzeichnet,**
**dass** das Identitätsmodul (USIM) vom Funk-Kommunikationsnetz darüber informiert wird, welche Authentifikationstoken (AUTNn) mit zugehöriger Sequenznummer (SQNn) sich in ein- und demselben Stapel (BA) befinden, und
**dass** von dem Identitätsmodul (USIM) mindestens eine Sequenznummer (SQNx, SQN) pro Stapel (BA) gespeichert und für die Entscheidung über Akzeptanz oder Abweisung der empfangenen Sequenznummer (SQNi) benutzt wird.

2. Verfahren nach Anspruch 1,
**dadurch gekennzeichnet,**
**dass** von einer Netzeinrichtung (AUC) des Funk-Kommunikationsnetzes für die Authentifikationstoken (AUTNn) jeweils ein Modusparameter (MODEn) vergeben wird, der für alle Authentifikationstoken (AUTNn) desselben Stapels (BA) einen identischen Wert aufweist,
**dass** der Modusparameter (MODEi) und die Sequenznummer (SQNi) des ausgewählten Authentifikationstokens (AVi) zu dem Identitätsmodul (USIM) gesendet werden, und
**dass** von dem Identitätsmodul (USIM) die empfangene Sequenznummer (SQNi) dann akzeptiert wird, wenn sie größer als die mit dem empfangenen Modusparameter (MODEi) korrespondierende gespeicherte Sequenznummer (SQNx) ist.

3. Verfahren nach Anspruch 2,
**dadurch gekennzeichnet,**
**dass** von dem Identitätsmodul (USIM) ein Zählwert (SQN-MS) pro Modusparameter (MODEn) zur Entscheidung über Akzeptanz oder Abweisung der empfangenen Sequenznummer (SQNi) gespeichert wird.

4. Verfahren nach Anspruch 2 oder 3,
**dadurch gekennzeichnet,**
**dass** die Modusparameter (MODEn) den Stapeln (BA) zirkulierend zugeteilt werden.

5. Verfahren nach Anspruch 1,
**dadurch gekennzeichnet,**
**dass** von einer Netzeinrichtung (AUC) des Funk-Kommunikationsnetzes für die Authentifikationstoken (AUTNn) mehrere Modusparameter (MODEn) vergeben werden, die für alle Authentifikationstoken (AUTNn) desselben Stapels (BA) unterschiedliche Werte aufweisen und die sich jeweils innerhalb eines einzelnen Stapels (BA) in der gleichen Reihenfolge wie die Authentifikationstoken (AUTNn) befinden, und
**dass** allen Authentifikationstoken (AUTNn) des Stapels (BA) die gleiche Sequenznummer (SQNn) zugeteilt wird.

6. Verfahren nach Anspruch 5,
**dadurch gekennzeichnet,**
**dass** von dem Identitätsmodul (USIM) eine Liste (LIST), deren Einträge jeweils eine Sequenznummer (SQN) und einen Modusparameter (MODE) aufweisen, zur Entscheidung über Akzeptanz oder Abweisung der empfangenen Sequenznummer (SQNi) gespeichert wird.

7. Verfahren nach Anspruch 6,
**dadurch gekennzeichnet,**
**dass** die empfangene Sequenznummer (SQNi) dann akzeptiert wird, wenn sie nicht in der Liste (LIST) erscheint und größer als die kleinste gespeicherte Sequenznummer (SQN) ist.

8. Verfahren nach Anspruch 6 oder 7,
**dadurch gekennzeichnet,**
**dass** die empfangene Sequenznummer (SQNi) dann akzeptiert wird, wenn sie in der Liste (LIST) erscheint und der empfangene Modusparameter (MODEi) größer als der mit der eingetragenen Sequenznummer (SQN) gespeicherte Modusparameter (MODE) ist.

9. Verfahren nach einem der Ansprüche 6 bis 8,
**dadurch gekennzeichnet,**
**dass** die Liste (LIST) bei Akzeptanz der empfangenen Sequenznummer (SQNi) im Identitätsmodul (USIM) aktualisiert wird.

10. Verfahren nach einem der vorhergehenden Ansprüche,
**dadurch gekennzeichnet,**
**dass** zumindest ein spezieller Modusparameter (MODEn) reserviert und bei Vorliegen einer dringenden Anforderung eines einzelnen Authentifikationsvektors (AVn) vergeben wird.

11. Verfahren nach einem der vorhergehenden Ansprüche,
**dadurch gekennzeichnet,**
**dass** von der Netzeinrichtung (AUC) des Funk-Kommunikationsnetzes die Modusparameter (MODEn) derart vergeben werden, dass die von unterschiedlichen Netzeinrichtungen gespeicherten Stapel (BA) von Authentifikationsvektoren (AVn) verschiedene Modusparameter (MODEn) aufweisen.

12. Funk-Kommunikationsnetz zur Authentifikation gegenüber einer Mobilstation (MT),
mit Netzeinrichtungen (SN/VLR, AUC/HLR)
- zum Erzeugen von Stapeln (BA) von Authentifikationsvektoren (AVn), die jeweils einen Authentifikationstoken (AUTNn) mit einer Sequenznummer (SQNn) enthalten, und
- zur Auswahl eines unbenutzten Authentifikationsvektors (AVi) aus dem jeweiligen Stapel für jede neue Authentifikation und zum Senden der Sequenznummer (SQNi) und des Authentifikationstoken (AUTNi) des ausgewählten Authentifikationsvektors (AVi) zur Mobilstation (MT), und mit
- einem Identitätsmodul (USIM) in der Mobilstation, das Mittel (UCC) zur Entscheidung über Akzeptanz oder Abweisung der empfangenen Sequenznummer (SQNi) für die Authentifikation aufweist,
**dadurch gekennzeichnet,**
**dass** das Funk-Kommunikationsnetz Mittel (AUC) zur Erzeugung einer Information (MODEn) über in ein- und demselben Stapel befindliche Authentifikationstoken (AUTNn) mit zugehörigen Sequenznummern (SQNn) aufweist, und
**dass** das Identitätsmodul (USIM) Mittel (UMM) zur Speicherung mindestens einer Sequenznummer (SQNx, SQN) pro Stapel (BA), die für die Entscheidung über Akzeptanz oder Abweisung der empfangenen Sequenznummer (SQNi) benutzt wird, aufweist.

13. Mobilstation (MT) zur Authentifikation eines Funk-Kommunikationsnetzes, das Netzeinrichtungen (SN/VLR, AUC/HLR)
- zum Erzeugen von Stapeln (BA) von Authentifikationsvektoren (AVn), die jeweils einen Authentifikationstoken (AUTNn) mit einer Sequenznummer (SQNn) enthalten, und
- zur Auswahl eines unbenutzten Authentifikationsvektors (AVi) aus dem jeweiligen Stapel für jede neue Authentifikation sowie zum Senden der Sequenznummer (SQNi) und des Authentifikationstokens (AUTNi) des ausgewählten Authentifikationsvektors (AVi) aufweist,
mit
- einem Identitätsmodul (USIM), das Mittel zur Entscheidung über Akzeptanz oder Abweisung der empfangenen Sequenznummer (SQNi) für die Authentifikation aufweist,
**dadurch gekennzeichnet,**
**dass** das Identitatsmodul (USIM) Mittel (UCC) zur Auswertung einer vom Funk-Kommunikationsnetz empfangenen Information (MODE) über in ein- und demselben Stapel befindliche Authentifikationstoken (AUTNn) mit zugehörigen Sequenznummern (SQNn) aufweist, und
**dass** das Identitätsmodul (USIM) Mittel (UMM) zur Speicherung einer Sequenznummer (SQNx) pro Stapel (BA), die für die Entscheidung über Akzeptanz oder Abweisung der empfangenen Sequenznummer (SQNi) benutzt wird, aufweist.

## Claims

1. Method for authentication of a radio communication network to a mobile station (MT) with an identity module (USIM),
in which on the network side
- batches (BA) of authentication vectors (AVn), each containing an authentication token (AUTNn) with a sequence number (SQNn) are created,
- for each new authentication from the relevant batch (BA) an unused authentication vector (AVi) is selected for which the authentication token (AUTNi) and sequence number (SQNi) are sent to the mobile station (MT) and for which, on the mobile station side
- a decision is made by an identity module (USIM) whether the received sequence number (SQNi) will be accepted or rejected for the authentication,
**characterized in that**,
the identification module (USIM) is informed by the radio communication network which authentication tokens (AUTNn) with associated sequence number (SQNn) are located in one and the same batch (BA), and
that at least one sequence number (SQNx, SQN) per batch (BA) is stored by the identity module (USIM) and is used to decide on acceptance or rejection of the received sequence number (SQNi).

2. Method according to Claim 1,
**characterized in that**,
a mode parameter (MODEn) is issued by an Authentication Center (AUC) of the radio communication network for the authentication token (AUTNn) in each case which has an identical value for all the authentication tokens (AUTNn) of the same batch (BA),
the mode parameter (MODE!) and the sequence number (SQNi) of the selected authentication token (AVi) are sent to the identity module (USIM), and
the identity module (USIM) accepts the received sequence number (SQNi) if it is larger than the stored sequence number (SQNi) corresponding to the received mode parameter (MODEi).

3. Method according to Claim 2,
**characterized in that**,
a count value (SQN-MS) per mode parameter (MODEn) is stored by the identity module (USIM) to decide on the acceptance or rejection of the received sequence number (SQNi).

4. Method according to Claim 2 or 3,
**characterized in that**,
the mode parameters (MODEn) are assigned in a circulating system to the batch (BA).

5. Method according to Claim 1,
**characterized in that**,
a number of mode parameters (MODEn) are issued by an authentication center (AUC) of the radio communication network for the authentication tokens (AUTNn) which have different values for all authentication tokens (AUTNn) of the same batch (BA) and which are in the same order within an individual batch (BA) as the authentication tokens (AUTNn) in each case and that all authentication tokens (AUTNn) of the batch (BA) are allocated the same sequence number (SQNn).

6. Method according to Claim 5,
**characterized in that**,
a list (LIST) is stored by the identity module (USIM) for which the entries each feature a sequence number (SQN) and a mode parameter (MODE) to decide on the acceptance or rejection of the received sequence number (SQNi).

7. Method according to Claim 6,
**characterized in that**,
the received sequence number (SQNi) is accepted if it does not appear in the list (LIST) and is larger than the smallest sequence number (SQN).

8. Method according to Claim 6 or 7,
**characterized in that**,
the received sequence number (SQNi) is accepted if it appears in the list (LIST) and the received mode parameter (MODEi) is larger than the mode parameter (MODE) stored with entered sequence number (SQN).

9. Method in accordance with one of the Claims 6 to 8,
**characterized in that**,
the list (LIST) is updated on acceptance of the received sequence number (SQNi) in the identity module (USIM).

10. Method in accordance with one of the previous claims
**characterized in that**,
at least one specific mode parameter (MODEn) is reserved and is issued if an urgent request of an individual authentication vector (AVn) is present.

11. Method in accordance with one of the previous claims
**characterized in that**,
the mode parameters (MODEn) are issued by the authentication center (AUC) of the radio communication network in such a way that the batches (BA) of authentication vectors (AVn) stored by the different network devices feature different mode parameters (MODEn).

12. Radio communication network for authenticating a mobile station (MT),
with network devices (SN/VLR, AUC/HLR)
- for creating batches (BA) of authentication vectors (AVn) which each contain an authentication token (AUTNn) with a sequence number (SQNn), and
- for selecting an unused authentication vector (AVi) from the relevant batch for each new authentication token and for transmitting the sequence number (SQNi) and the authentication token (AUTNi) of the selected authentication vector (AVi) to the mobile station (MT), and with
- an identity module (USIM) in the mobile station featuring means (UCC) for deciding about acceptance or rejection of the received sequence number (SQNi) for authentication,
**characterized in that**,
the radio communication network features means (AUC) for creating information (MODEn) about authentication tokens (AUTNn) located in one and the same batch with associated sequence numbers (SQNn), and
the identity module (USIM) features means (UMM) for storing at least one sequence number (SQNx, SQN) per batch (BA) which are used for the decision about acceptance or rejection of the received sequence number (SQNi).

13. mobile station (MT) for authentication of a radio communication network which features network devices (SN/VLR, AUC/HLR)
- for creating batches (BA) of authentication vectors (AVn), which each contain an authentication token (AUTNn) with a sequence number (SQNn), and
- for selection of an unused authentication vector (AVi) from the relevant batch for each new authentication token as well as for transmission of the sequence number (SQNi) and of the authentication token (AUTNi) of the selected authentication vector (AVi),
with
- an identity module (USIM), featuring means for deciding about acceptance or rejection of the received sequence number (SQNi) for the authentication token,
**characterized in that**,
the identity module (USIM) features means (UCC) for evaluating information received from the radio communication network (MODE) about an authentication token (AUTNn) located in one and the same batch with associated sequence numbers (SQNn), and
that the identity module (USIM) features means (UMM) for storing one sequence number (SQNx) per batch (BA), which is used for the decision about acceptance or rejection of the received sequence number (SQNi).

## Revendications

1. Procédé d'authentification d'un réseau de télécommunication radio vis-à-vis d'un poste mobile (MT) doté d'un module d'identification (USIM), dans lequel du côté réseau :
- des piles (BA) de vecteurs d'authentification (AVn) qui contiennent à chaque fois un jeton d'authentification (AUTNn) avec un numéro de séquence (SQNn) sont créées,
- pour chaque nouvelle authentification, un vecteur d'authentification (AVi) non utilisé, dont le jeton d'authentification (AUTNi) avec le numéro de séquence (SQNi) sont envoyés au poste mobile (MT), est sélectionné dans la pile (BA) concernée et dans lequel du côté poste mobile :
- est décidé par le module d'identification (USIM) si le numéro de séquence (SQNi) reçu pour l'authentification est accepté ou rejeté,
**caractérisé en ce que**
le module d'identification (USIM) est informé par le réseau de télécommunication radio sur les jetons d'authentification (AUTNn) avec les numéros de séquence (SQNn) associés se trouvent dans une seule et même pile (BA) et
**en ce que** le module d'identification (USIM) conserve en mémoire au moins un numéro de séquence (SQNx, SON) pour chaque pile (BA) et l'utilise pour décider si le numéro de séquence (SQNi) reçu est accepté ou rejeté.

2. Procédé selon la revendication 1,
**caractérisé en ce**
**qu'**un paramètre de mode (MODEn) qui présente une valeur identique pour tous les jetons d'authentification (AUTNn) de la même pile (BA) est délivré pour le jeton d'authentification (AUTNn) par un dispositif (AUC) du réseau de télécommunication radio,
**que** le paramètre de mode (MODEi) et le numéro de séquence (SQNi) du jeton d'authentification sélectionné (AVi) sont envoyés au module d'identification (USIM) et
**que** le numéro de séquence (SQNi) reçu par le module d'identification (USIM) est accepté lorsque ce numéro est plus grand que le numéro de séquence (SQNx) conservé en mémoire et correspondant au paramètre de mode (MODEi) reçu.

3. Procédé selon la revendication 2,
**caractérisé en ce que**
pour chaque paramètre de mode (MODEn), une valeur de comptage (SQN-MS) est conservée en mémoire par le module d'identification (USIM) pour décider si le numéro de séquence (SQNi) reçu est accepté ou rejeté.

4. Procédé selon les revendications 2 ou 3,
**caractérisé en ce que**
le paramètre de mode (MODEn) est réparti de manière circulaire entre les piles (BA).

5. Procédé selon la revendication 1,
**caractérisé en ce que**
plusieurs paramètres de mode (MODEn) qui présentent différentes valeurs pour tous les jetons d'authentification (AUTNn) de la même pile (BA) et qui se trouvent à l'intérieur d'une pile (BA) individuelle dans la même succession que les jetons d'authentification (AUTNn) sont délivrés par un dispositif (AUC) du réseau de télécommunication radio pour le jeton d'authentification (AUTNn) et
**en ce que** tous les jetons d'authentification (AUTNn) de la pile (BA) reçoivent le même numéro de séquence (SQNn).

6. Procédé selon la revendication 5,
**caractérisé en ce**
**qu'**une liste (LIST) dont les entrées présentent à chaque fois un numéro de séquence (SON) et un paramètre de mode (MODE) est conservée en mémoire dans le module d'identification (USIM) pour décider si le numéro de séquence (SQNi) reçu est accepté ou rejeté.

7. Procédé selon la revendication 6,
**caractérisé en ce que**
le numéro de séquence (SQNi) reçu est accepté lorsqu'il n'apparaît pas sur la liste (LIST) et qu'il est plus grand que le plus petit numéro de séquence (SON) conservé en mémoire.

8. Procédé selon les revendications 6 ou 7,
**caractérisé en ce que**
le numéro de séquence (SQNi) reçu est accepté lorsqu'il apparaît sur la liste (LIST) et que le paramètre de mode (MODEi) reçu est plus grand que le paramètre de mode (MODE) conservé en mémoire avec le numéro de séquence (SON) qui a été introduit.

9. Procédé selon l'une des revendications 6 à 8,
**caractérisé en ce que**
la liste (LIST) est mise à jour dans le module d'identification (USIM) lorsque le numéro de séquence (SQNi) est accepté.

10. Procédé selon l'une des revendications précédentes,
**caractérisé en ce**
**qu'**au moins un paramètre de mode (MODEn) spécial est réservé et est délivré en cas de demande urgente d'un vecteur individuel d'authentification (AVn).

11. Procédé selon l'une des revendications précédentes,
**caractérisé en ce que**
les paramètres de mode (MODEn) sont délivrés par le dispositif (AUC) du réseau de télécommunication radio de telle sorte que les piles (BA) des vecteurs d'authentification (AVn) conservées en mémoire par différents dispositifs de réseau présentent différents paramètres de mode (MODEn).

12. Réseau de télécommunication radio, pour l'authentification vis-à-vis d'un poste mobile (MT), doté de dispositifs de réseau (SN/VLR, AUC/HLR),
- pour la création de piles (BA) de vecteurs d'authentification (AVn) qui contiennent à chaque fois un jeton d'authentification (AUTNn) avec un numéro de séquence (SQNn) et
- pour la sélection d'un vecteur d'authentification (AVi) non utilisé dans la pile concernée pour chaque nouvelle authentification et pour l'envoi du numéro de séquence (SQNi) et du jeton d'authentification (AUTNi) du vecteur d'authentification (AVi) sélectionné au poste mobile (MT) et doté
- dans le poste mobile d'un module d'identification (USIM) qui présente des moyens (UCC) pour décider si le numéro de séquence (SQNi) reçu pour l'authentification est accepté ou rejeté,
**caractérisé en ce que** le réseau de télécommunication radio présente des moyens (AUC) pour créer une information (MODEn) sur des jetons d'authentification (AUTNn), avec des numéros de séquence (SQNn) associés, qui se trouvent dans une seule et même pile et
**en ce que** le module d'identification (USIM) présente pour chaque pile (BA) des moyens (UMM) de mise en mémoire d'au moins un numéro de séquence (SQNx, SQN), qui sont utilisés pour décider si le numéro de séquence (SQNi) reçu est accepté ou rejeté.

13. Poste mobile (MT) pour l'authentification d'un réseau de télécommunication radio qui présente des dispositifs de réseau (SN/VLR, AUC/HLR)
- pour la création de piles (BA) de vecteurs d'authentification (AVn) qui contiennent à chaque fois un jeton d'authentification (AUTNn) avec un numéro de séquence (SQNn) et
- pour la sélection d'un vecteur d'authentification (AVi) non utilisé dans la pile concernée pour chaque nouvelle authentification et pour l'envoi du numéro de séquence (SQNi) et du jeton d'authentification (AUTNi) du vecteur d'authentification (AVi) sélectionné, et qui présente
- un module d'identification (USIM) qui présente des moyens pour décider si le numéro de séquence (SQNi) reçu pour l'authentification est accepté ou rejeté,
**caractérisé en ce que**
le module d'identification (USIM) présente des moyens (UCC) pour évaluer une information (MODE) reçue du réseau de télécommunication radio sur un jeton d'authentification (AUTNn), avec des numéros de séquence (SQNn) associés, présent dans une seule et même pile et
**en ce que** le module d'identification (USIM) présente des moyens (UMM) qui conservent en mémoire un numéro de séquence (SQNx) pour chaque pile (BA) et qui sont utilisés pour décider si le numéro de séquence (SQNi) reçu est accepté ou refusé.
